# FASCICULE DE BREVET EUROPEEN

(11) **EP 3 831 709 B1**
(45) Date de publication et mention de la délivrance du brevet: **07.06.2023**
(21) Numéro de dépôt: 20210123.4
(22) Date de dépôt: 26.11.2020
(51) Int. Cl.: B64B 1/06, B64B 1/38

(54) **STRATEGIE DE MISE EN SAUVEGARDE D'UN BALLON DIRIGEABLE EN CAS D'ECHAUFFEMENT DE SON GENERATEUR SOLAIRE**
STRATEGIE ZUR SICHERUNG EINES LENKBAREN BALLONS IM FALLE DER ÜBERHITZUNG EINES SOLARGENERATORS
QUICK-HEATING STRATEGY FOR BACKING UP AN AIRSHIP IN THE EVENT OF ITS SOLAR GENERATOR OVERHEATING

(30) Priorité: 05.12.2019 FR 1913802
(43) Date de publication de la demande: 09.06.2021
(73) Titulaire: THALES, 92400 Courbevoie (FR)
(72) Inventeur: RENAULT, Hervé, 06156 CANNES LA BOCCA CEDEX (FR); PROST, Jean-Pierre, 06156 CANNES LA BOCCA CEDEX (FR); MESRINE, Magali, 06156 CANNES LA BOCCA CEDEX (FR)
(74) Mandataire: Atout PI Laplace

(56) Documents cités:
- CN-A- 107 979 157
- US-A1- 2015 076 281
- US-A1- 2017 019 055
- US-B1- 6 540 178
- US-B2- 6 609 680

## Description

L'invention porte sur des plateformes dirigeables à enveloppe souple, couramment appelé de type "blimp" en langue anglaise, munies d'un générateur solaire.

Dans leur immense majorité, les dirigeables troposphériques n'utilisent pas de générateurs solaires mais une source d'énergie non renouvelable comme du kérosène. La troposphère est située entre la surface du globe et la stratosphère, et la stratosphère est la seconde couche de l'atmosphère terrestre, comprise entre la troposphère (au-dessous) et la mésosphère (au-dessus). La limite supérieure de la troposphère, la tropopause, se situe à une altitude d'environ 8 à 15 kilomètres selon la latitude et la saison.

Des générateurs solaires sont en revanche courants sur les dirigeables stratosphériques, comme par exemple dans US 6 540 178 B1. Il est connu de mettre en oeuvre un contrôle thermique du générateur solaire basé sur la mise en place d'échangeurs et de protections thermiques intégrés au générateur solaire, par exemple décrit dans « Thermal protection method of the solar array for stratospheric airships » by Junhui Meng, Zhongbing Yao, Huafei Du, Mingyun Lv in Applied Thermal Engineering 111 (2017) 802-810. L'impact en masse d'une telle solution est alors important voire rédhibitoire pour l'obtention des performances recherchées pour de tels ballons dirigeables, en termes d'altitude, de vitesse, et de disponibilité, ce qui remet en cause leur faisabilité.

En outre, un échauffement excessif du générateur solaire peut provenir d'une vitesse trop faible du ballon dirigeable par rapport à l'air environnant, et donc d'une convection forcée insuffisante.

Un but de l'invention est de pallier les problèmes précédemment cités, et notamment d'éviter un échauffement excessif du générateur solaire en cas d'une convection forcée trop faible.

Il est proposé, selon un aspect de l'invention, un ballon dirigeable stratosphérique comprenant une enveloppe souple munie d'un générateur solaire disposé sur la partie supérieure de l'enveloppe souple destinée à être éclairée en vol par le soleil, le ballon dirigeable comprenant :
- au moins un dispositif de gestion de la position du centre de gravité du ballon dirigeable ;
- au moins un dispositif de stabilisation de l'attitude du ballon dirigeable ; et
- un module de commande couplée desdits dispositifs, configuré pour commander, lorsque la vitesse de déplacement du ballon dirigeable par rapport à l'air environnant est inférieure à un premier seuil et/ou la température du générateur solaire est supérieure à un deuxième seuil, le ballon dirigeable de sorte qu'il effectue une rotation sensiblement d'un demi-tour autour de son axe longitudinal, permettant de protéger le générateur solaire de l'éclairement du soleil.

Ainsi, lorsque la vitesse du ballon par rapport à l'air environnant, est inférieure à un premier seuil au-delà duquel la régulation thermique par convection avec l'air environnant évite une surchauffe du générateur solaire, et par conséquence de l'enveloppe et de son gaz, l'invention permet d'éviter une dégradation du ballon dirigeable stratosphérique dans ce cas, dans lequel la température du générateur solaire s'accroit très vite si jamais le soleil l'éclaire. De même, lorsque la température du générateur solaire dépasse un deuxième seuil, ou lorsque les deux conditions sont réalisées, l'invention permet d'éviter une dégradation du ballon dirigeable stratosphérique. L'invention permet ainsi d'éviter, dans ce type de situations, une rupture du générateur solaire, ainsi que des dégradations de l'enveloppe qui le supporte en lui évitant de subir des dommages par augmentation de la température du matériau d'enveloppe sous le générateur solaire, ou par échauffement du gaz porteur et augmentation de la pression interne donc des tensions dans le matériau de l'enveloppe.

Un tel ballon stratosphérique a donc la capacité de masquer le générateur solaire du soleil, et ainsi éviter que le générateur solaire ne monte en température sous l'effet du flux solaire, ce qui relaxe ainsi les contraintes thermiques et mécaniques associées. Il permet également d'éviter une augmentation des flux thermiques générés vers l'enveloppe souple susceptible d'entraîner sa dégradation voire sa rupture, ainsi que de limiter l'échauffement induit du gaz porteur dans l'enveloppe souple par conduction au travers de l'enveloppe, donc de limiter l'augmentation de la pression interne ce qui peut également entraîner une rupture de l'enveloppe.

On entend par commande couplée la gestion coordonnée du dispositif de stabilisation de l'attitude du ballon dirigeable et du dispositif de gestion de la position du centre de gravité du ballon dirigeable. Ce couplage comprend également la détection du passage de la vitesse air sous un premier seuil prédéfini et/ou le passage de la température du générateur solaire au-dessus d'un deuxième seuil prédéfini.

Dans un mode de réalisation, le premier seuil est inférieur à 10 ms⁻¹.

En effet, une vitesse suffisamment élevée permet de maximiser la convection forcée et donc de diminuer l'impact thermique du flux solaire sur le générateur solaire et sur l'enveloppe. La conséquence est donc une relaxation ou un assouplissement sur les spécifications de dimensionnement de ces éléments.

Selon un mode de réalisation, le premier seuil vaut 5 ms⁻¹.

Un tel seuil, nécessite d'augmenter la spécification de tenue en température du générateur solaire et de l'enveloppe mais offre plus de marge par rapport à la vitesse air maximale atteignable par le dirigeable ce qui allège les contraintes imposées aux manoeuvres possibles en vol.

Dans un mode de réalisation, le deuxième seuil est inférieur à 120 °C, et vaut par exemple 100 °C.

Dans un mode de réalisation, le dispositif de gestion de la position du centre de gravité du ballon dirigeable est un dispositif actif.

Utiliser un dispositif actif de gestion de la position du centre de gravité permet d'optimiser la configuration du ballon dirigeable en fonction des besoins, de faciliter les manoeuvres requises lors des différentes phases de vol et de le rendre plus robuste aux variations de l'environnement.

Selon un mode de réalisation, le dispositif actif de gestion de la position du centre de gravité du ballon dirigeable comprend des éléments commandés configurés pour déplacer des masses.

Par exemple, les éléments commandés peuvent comprendre des actuateurs et dispositifs de rappel.

Les masses peuvent être des éléments embarqués à bord du ballon dirigeable de manière spécifique pour réaliser cette fonction, ou être des éléments utilisés par le dirigeable en vol pour d'autres fonctions et rendus mobiles pour rajouter cette gestion active.

Le dispositif actif de gestion de la position du centre de gravité du ballon dirigeable peut comprendre au moins un élément mobile autour de l'enveloppe.

Dans un mode de réalisation, le dispositif de gestion de la position du centre de gravité du ballon est un dispositif passif.

Par exemple, le dispositif de gestion passif de la position du centre de gravité du ballon peut comprendre un positionnement prédéterminé d'éléments embarqués à bord du ballon dirigeable, de sorte que le centre de gravité du ballon dirigeable soit situé entre son axe longitudinal et le générateur solaire.

Cette gestion passive de la position du centre de gravité a pour principal avantage d'être plus simple opérationnellement que le système actif, en ne mettant en oeuvre aucun mécanisme.

Les éléments embarqués peuvent comprendre au moins une batterie électrique, et/ou au moins une pile à combustible et/ou au moins un réservoir de carburant.

Selon un mode de réalisation, le dispositif de stabilisation de l'attitude du ballon est un dispositif actif.

Par exemple, le dispositif actif de stabilisation de l'attitude du ballon dirigeable peut comprendre des gouvernes aérodynamiques et/ou des propulseurs sur cardan et/ou des propulseurs latéraux et/ou des volants d'inertie.

Dans un mode de réalisation, le dispositif de stabilisation de l'attitude du ballon dirigeable est un dispositif passif.

Par exemple, le dispositif passif de stabilisation de l'attitude du ballon peut être un rappel pendulaire induit par un placement prédéterminé du centre de gravité du ballon dirigeable, en dehors de l'axe longitudinal.

Le but est que le placement du centre de gravité du ballon dirigeable de sorte qu'il soit situé du bon côté de l'axe longitudinal en fonction des besoins i.e. entre son axe longitudinal et le générateur solaire situé en haut, face au soleil en cas de vitesse air inférieure au premier seuil, et/ou en cas de température du générateur solaire supérieure au deuxième seuil et entre son axe longitudinal et la nacelle charge utile dans le cas nominal.

Il est également proposé, selon un autre aspect de l'invention, un procédé de commande d'un ballon dirigeable stratosphérique comprenant une enveloppe souple munie d'un générateur solaire disposé sur la partie supérieure de l'enveloppe souple destinée à être éclairée en vol par le soleil, dans lequel on commande de manière couplée la position du centre de gravité du ballon dirigeable et la stabilisation de l'attitude du ballon dirigeable de sorte que, lorsque la vitesse de déplacement du ballon dirigeable par rapport à l'air environnant est inférieure à un premier seuil et/ou lorsque la température du générateur solaire est supérieure au deuxième seuil, le ballon dirigeable effectue une rotation sensiblement d'un demi-tour autour de son axe longitudinal permettant de protéger le générateur solaire de l'éclairement du soleil.

L'invention sera mieux comprise à l'étude de quelques modes de réalisation décrits à titre d'exemples nullement limitatifs et illustrés par les dessins annexés sur lesquels les figures :
[Fig.1] illustre schématiquement un ballon dirigeable stratosphérique, selon un aspect de l'invention ;
[Fig.2a] illustre schématiquement un ballon dirigeable stratosphérique, selon un aspect de l'invention ;
et [Fig.2b] illustre schématiquement un ballon dirigeable stratosphérique, selon l'aspect de l'invention de la figure 2a ;
[Fig.3a] illustre schématiquement un ballon dirigeable stratosphérique, selon un aspect de l'invention ; et
[Fig.3b] illustre schématiquement un ballon dirigeable stratosphérique, selon l'aspect de l'invention de la figure 3a.

Sur l'ensemble des figures, les éléments ayant des références identiques sont similaires.

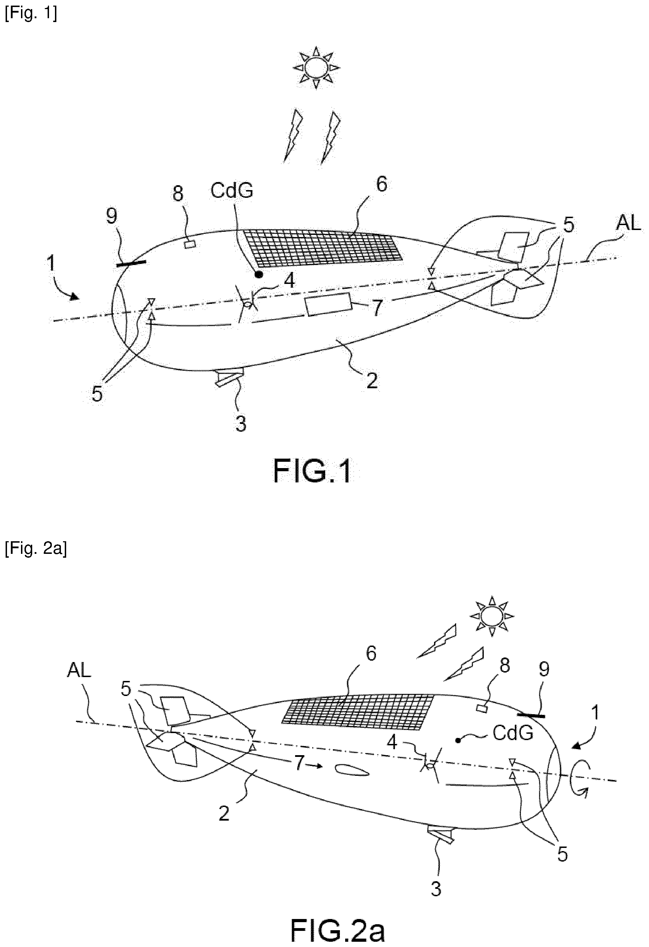

La figure 1 représente un ballon dirigeable stratosphérique 1 comprenant une enveloppe souple 2, une nacelle 3, des propulseurs 4 et un dispositif 5 de stabilisation de l'attitude du ballon dirigeable.

L'enveloppe souple 2 comprend un générateur solaire 6 disposé sur la partie supérieure de l'enveloppe souple 2 destinée à être éclairée en vol par le soleil. Le générateur solaire 6 peut être interne ou externe à l'enveloppe 2.

La nacelle 3 porte les systèmes d'alimentation et de commande ainsi que le matériel technique nécessaires aux différentes missions du dirigeable qui peuvent être d'observation, de surveillance ou de télécommunications.

Le générateur solaire 6 permet de jour d'alimenter les éléments embarqués, et de recharger le système de stockage d'énergie électrique qui prend ensuite le relais la nuit.

Le ballon dirigeable 1 comprend au moins un dispositif 7 de gestion de la position du centre de gravité du ballon, au moins un dispositif 5 de stabilisation de l'attitude du ballon, et un module 8 de commande couplée desdits dispositifs, de sorte que, lorsque la vitesse de déplacement du ballon dirigeable par rapport à l'air environnant est inférieure à un premier seuil S1 et/ou la température du générateur solaire est supérieure à un deuxième seuil S2, le ballon dirigeable 1 effectue une rotation sensiblement d'un demi-tour selon son axe longitudinal AL permettant de protéger le générateur solaire 6 de l'éclairement du soleil.

Chacun des dispositifs (7, 5) de gestion de la position du centre de gravité du ballon dirigeable et de stabilisation de l'attitude du ballon dirigeable peut être actif ou passif, même si tous les cas ne sont pas illustrés en détail dans la suite de la description.

Le ballon 1 comprend un capteur 9 de mesure de la vitesse de déplacement du ballon 1 par rapport à l'air environnant.

Le premier seuil S1 est inférieur à 10 ms⁻¹, et vaut avantageusement 5 ms⁻¹.

Le deuxième seuil S2 est inférieur à 120 °C, et vaut avantageusement 100 °C.

Lorsque le dispositif 7 de gestion de la position du centre de gravité du ballon dirigeable 1 est un dispositif actif, il peut comprendre des éléments commandés configurés pour déplacer des masses 7a. Les éléments commandés peuvent comprendre des actuateurs 7b et dispositifs de rappel 7c, et les masses (7a) peuvent comprendre des éléments embarqués à bord du ballon dirigeable 1 spécifiquement conçus pour remplir cette fonction (tel un ballast) ou remplissant également d'autres fonctions (tel un dispositif de stockage d'énergie).

Lorsque le dispositif 7 de gestion de la position du centre de gravité du ballon dirigeable 1 est un dispositif passif, ou en d'autres termes lorsque la gestion de la position du centre de gravité du ballon dirigeable 1 est entièrement passive, il peut comprendre un positionnement prédéterminé d'éléments embarqués à bord du ballon dirigeable 1, de sorte que le centre de gravité CdG du ballon dirigeable 1 soit situé entre son axe longitudinal AL et le générateur solaire 6 situé en haut, face au soleil, en fonctionnement nominal. Les éléments embarqués peuvent comprendre au moins une batterie électrique, et/ou au moins une pile à combustible et/ou au moins un réservoir de carburant ou tout autre équipement dont la masse globale est suffisante pour assurer cette fonction.

On entend par fonctionnement nominal le fonctionnement du ballon dirigeable 1 lorsque sa vitesse par rapport à l'air environnant est supérieure ou égale au seuil premier S1, et/ou lorsque la température du générateur solaire est inférieure ou égale au deuxième seuil S2.

Lorsque le dispositif 5 de stabilisation de l'attitude du ballon dirigeable 1 est un dispositif actif, il peut comprendre des gouvernes aérodynamiques et/ou des propulseurs sur cardan et/ou des propulseurs latéraux et/ou des volants d'inertie.

Lorsque le dispositif 5 de stabilisation de l'attitude du ballon dirigeable 1 est un dispositif passif, il peut consister en un rappel pendulaire induit par un placement du centre de gravité CdG du ballon dirigeable 1 de sorte que qu'il soit situé entre son axe longitudinal AL et le générateur solaire 6 situé en haut, face au soleil, en fonctionnement nominal.

Ci-suivent deux modes de réalisation détaillés non limitatifs.

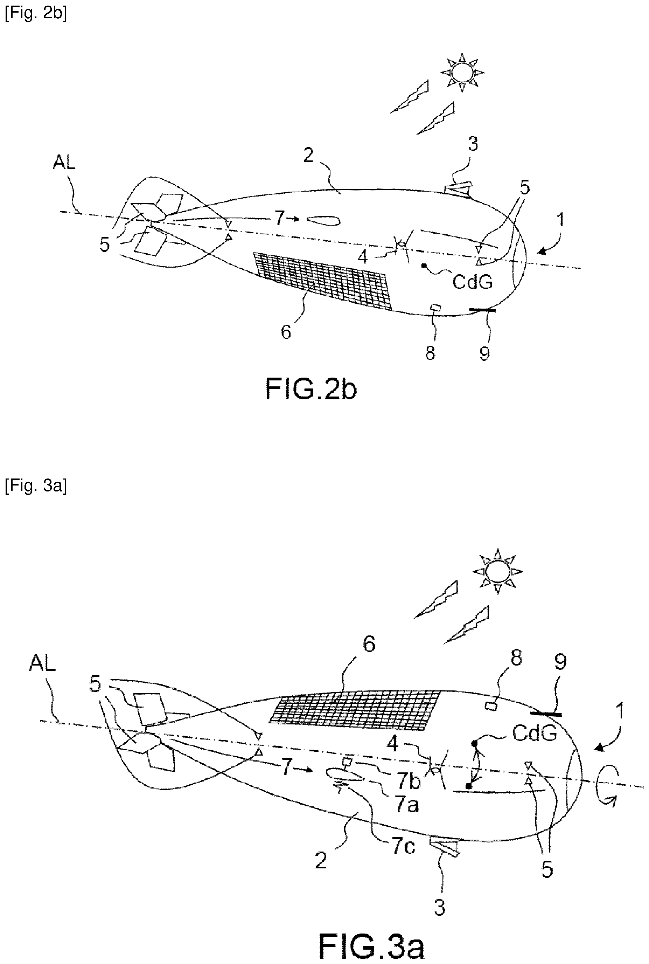

Les figures 2a et 2b illustrent un ballon dirigeable stratosphérique 1 comprenant un dispositif 7 passif de gestion de la position du centre de gravité CdG du ballon dirigeable 1 couplé à un dispositif 5 actif de stabilisation de l'attitude du ballon 1.

La position du centre de gravité CdG du ballon dirigeable 1 est positionné à l'endroit voulu i.e. du même côté que le générateur solaire 6 par rapport à l'axe longitudinal AL, ou en d'autres termes entre l'axe longitudinal AL et le haut de l'enveloppe, où se trouve le générateur solaire 6. En fonctionnement nominal du ballon dirigeable 1, le générateur solaire 6 est orienté vers le soleil et l'attitude est contrôlée par le dispositif 5 actif de stabilisation de l'attitude, comme illustré sur la figure 2a.

Cette opération est réalisée au sol avant décollage, en jouant sur la position de divers équipements embarqués (avionique, dispositifs de stockage d'énergie...).

Une fois en vol, l'attitude du dirigeable est pilotée en utilisant les actionneurs disponibles 5 tels : les gouvernes aérodynamiques, et/ou des propulseurs sur cardan ("gimbal" en langue anglaise), et/ou des propulseurs latéraux, et/ou des volants d'inertie, formant un dispositif actif de stabilisation de l'attitude du ballon.

Si la vitesse du ballon dirigeable 1 par rapport à l'air environnant passe sous le premier seuil S1 et/ou la température du générateur solaire 6 atteint le deuxième seuil S2, alors le ballon dirigeable 1 pivote d'environ 180° autour de son axe longitudinal AL et le ballon se retrouve dans la position illustrée sur la figure 2b, dans laquelle le générateur solaire 6 est protégé du soleil.

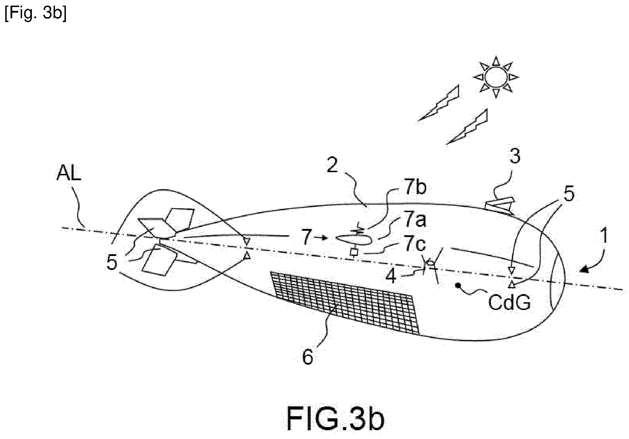

Les figures 3a et 3b illustrent un ballon dirigeable stratosphérique 1 comprenant un dispositif 7 actif de gestion de la position du centre de gravité CdG du ballon dirigeable 1 couplé à un dispositif 5 passif de stabilisation de l'attitude du ballon dirigeable 1.

La position du centre de gravité CdG est modifiée en vol via le déplacement de masses dans le sens requis. Pour cela, certains modules 7a implantés sur l'enveloppe 2 sont rendus mobiles. Les modules batteries sont notamment privilégiés pour cette opération en raison de leur masse notable. Ces modules 7a peuvent être rendus mobiles via un dispositif très fiable à base de dispositifs de rappel 7c et d'actuateurs 7b agissant en sens inverse ou via un système d'actuateurs sur rails ou sur câbles.

Le centre de gravité CdG du ballon dirigeable 1 est positionné à l'endroit voulu dans le cas nominal i.e. à l'opposé du générateur solaire 6 par rapport à l'axe longitudinal AL, ou en d'autres termes entre l'axe longitudinal AL et la nacelle 3 de charge utile. En fonctionnement nominal du ballon dirigeable 1, le générateur solaire 6 est orienté vers le soleil et l'attitude est stabilisée passivement via le rappel pendulaire induit par la position du centre de gravité CdG et contrôlée par le dispositif 5 actif de stabilisation de l'attitude, comme illustré sur la figure 3a.

Si la vitesse du ballon dirigeable 1 par rapport à l'air environnant passe sous premier seuil S1 et/ou la température du générateur solaire 6 atteint le deuxième seuil S2, le dispositif 7 actif de gestion de la position du centre de gravité CdG ramène le centre de gravité CdG entre l'axe longitudinal AL et le haut de l'enveloppe 2, où se trouve le générateur solaire 6. Cette action a pour effet de générer un couple pendulaire amenant à une rotation de 180° autour de son axe longitudinal AL et le ballon se retrouve dans la position illustrée sur la figure 3b, dans laquelle le générateur solaire 6 est protégé du soleil.

## Revendications

1. Ballon dirigeable stratosphérique (1) comprenant une enveloppe souple (2) munie d'un générateur solaire (6) disposé sur la partie supérieure de l'enveloppe souple (2) destinée à être éclairée en vol par le soleil, le ballon dirigeable (1) comprenant :
- au moins un dispositif (7) de gestion de la position du centre de gravité du ballon dirigeable ;
- au moins un dispositif (5) de stabilisation de l'attitude du ballon dirigeable ; et
- un module (8) de commande couplée desdits dispositifs (7, 5), **caractérisé en ce que** le module est configuré pour commander, lorsque la vitesse de déplacement du ballon dirigeable (1) par rapport à l'air environnant est inférieure à un premier seuil (S1) et/ou la température du générateur solaire est supérieure à un deuxième seuil (S2), le ballon dirigeable (1) de sorte qu'il effectue une rotation sensiblement d'un demi-tour autour de son axe longitudinal (AL), permettant de protéger le générateur solaire (6) de l'éclairement du soleil.

2. Ballon dirigeable stratosphérique (1) selon la revendication 1, dans lequel le premier seuil (S1) est inférieur à 10 ms⁻¹.

3. Ballon dirigeable stratosphérique (1) selon la revendication 2, dans lequel le premier seuil (S1) vaut 5 ms⁻¹.

4. Ballon dirigeable stratosphérique (1) selon l'une des revendications 1 à 3, dans lequel le deuxième seuil (S2) est inférieur à 120 °C.

5. Ballon dirigeable stratosphérique (1) selon la revendication 4, dans lequel le deuxième seuil (S2) vaut 100 °C.

6. Ballon dirigeable stratosphérique (1) selon l'une des revendications 1 à 5, dans lequel le dispositif (7) de gestion de la position du centre de gravité du ballon dirigeable est un dispositif actif.

7. Ballon dirigeable stratosphérique (1) selon la revendication 6, comprenant des masses (7a), et dans lequel le dispositif (7) actif de gestion de la position du centre de gravité du ballon dirigeable comprend des éléments commandés configurés pour déplacer les masses (7a).

8. Ballon dirigeable stratosphérique (1) selon la revendication 7, dans lequel les éléments commandés comprennent des actuateurs (7b) et dispositifs de rappel (7c).

9. Ballon dirigeable stratosphérique (1) selon la revendication 7 ou 8, dans lequel les masses (7a) comprennent des éléments embarqués à bord du ballon dirigeable.

10. Ballon dirigeable stratosphérique (1) selon l'une des revendications 6 à 9, dans lequel le dispositif (7) actif de gestion de la position du centre de gravité du ballon dirigeable comprend au moins un élément mobile autour de l'enveloppe.

11. Ballon dirigeable stratosphérique (1) selon l'une des revendications 1 à 5, dans lequel le dispositif (7) de gestion de la position du centre de gravité du ballon dirigeable est un dispositif passif.

12. Ballon dirigeable selon la revendication 11, dans lequel le dispositif (7) de gestion passif de la position du centre de gravité du ballon dirigeable comprend un positionnement prédéterminé d'éléments embarqués à bord du ballon dirigeable, de sorte que le centre de gravité du ballon dirigeable soit situé entre son axe longitudinal (AL) et le générateur solaire (6).

13. Ballon dirigeable stratosphérique (1) selon la revendication 12, dans lequel les éléments embarqués comprennent au moins une batterie électrique, et/ou au moins une pile à combustible et/ou au moins un réservoir de carburant.

14. Ballon dirigeable stratosphérique (1) selon l'une des revendications 1 à 13, dans lequel le dispositif (5) de stabilisation de l'attitude du ballon dirigeable est un dispositif actif.

15. Ballon dirigeable stratosphérique (1) selon la revendication 14, dans lequel le dispositif (5) actif de stabilisation de l'attitude du ballon dirigeable comprend des gouvernes aérodynamiques et/ou des propulseurs sur cardan et/ou des propulseurs latéraux et/ou des volants d'inertie.

16. Ballon dirigeable stratosphérique (1) selon l'une des revendications 1 à 13, dans lequel le dispositif (5) de stabilisation de l'attitude du ballon dirigeable est un dispositif passif.

17. Ballon dirigeable stratosphérique (1) selon la revendication 16, dans lequel le dispositif (5) passif de stabilisation de l'attitude du ballon dirigeable est un rappel pendulaire induit par un placement prédéterminé du centre de gravité du ballon dirigeable, en dehors de l'axe longitudinal (AL).

18. Procédé de commande d'un ballon dirigeable stratosphérique (1) comprenant une enveloppe souple (2) munie d'un générateur solaire (6) disposé sur la partie supérieure de l'enveloppe souple destinée à être éclairée en vol par le soleil, **caractérisé en ce qu'** on commande (8) de manière couplée la position du centre de gravité du ballon dirigeable et la stabilisation de l'attitude du ballon dirigeable de sorte que, lorsque la vitesse de déplacement du ballon dirigeable par rapport à l'air environnant est inférieure à un premier seuil (S1) et/ou la température du générateur solaire est supérieure à un deuxième seuil (S2), le ballon dirigeable effectue une rotation sensiblement d'un demi-tour autour de son axe longitudinal (AL) permettant de protéger le générateur solaire (6) de l'éclairement du soleil.

## Patentansprüche

1. Stratosphärischer lenkbarer Ballon (1) umfassend eine flexible Hülle (2), die mit einem Solargenerator (6) versehen ist, der auf dem oberen Teil der flexiblen Hülle (2) angeordnet ist, der dazu bestimmt ist, während des Fluges von der Sonne beleuchtet zu werden, wobei der lenkbare Ballon (1) Folgendes umfasst:
- mindestens eine Vorrichtung (7) zur Lenkung der Position des Schwerpunkts des lenkbaren Ballons;
- mindestens eine Vorrichtung (5) zur Lagestabilisierung des lenkbaren Ballons; und
- ein Modul (8) zur gekoppelten Steuerung der genannten Vorrichtungen (7, 5), **dadurch gekennzeichnet, dass** das Modul so konfiguriert ist, dass es, wenn die Geschwindigkeit der Bewegung des lenkbaren Ballons (1) in Bezug auf die umgebende Luft unter einem ersten Schwellenwert (S1) liegt und/oder die Temperatur des Solargenerators über einem zweiten Schwellenwert (S2) liegt, den lenkbaren Ballon (1) so steuert, dass er eine Drehung von im Wesentlichen einer halben Umdrehung um seine Längsachse (AL) ausführt, wodurch der Solargenerator (6) vor der Sonneneinstrahlung geschützt werden kann.

2. Stratosphärischer lenkbarer Ballon (1) nach Anspruch 1, wobei der erste Schwellenwert (S1) weniger als 10 ms⁻¹ beträgt.

3. Stratosphärischer lenkbarer Ballon (1) nach Anspruch 2, wobei der erste Schwellenwert (S1) 5 ms⁻¹ beträgt.

4. Stratosphärischer lenkbarer Ballon (1) nach einem der Ansprüche 1 bis 3, wobei der zweite Schwellenwert (S2) kleiner als 120 °C ist.

5. Stratosphärischer lenkbarer Ballon (1) nach Anspruch 4, wobei der zweite Schwellenwert (S2) 100 °C beträgt.

6. Stratosphärischer lenkbarer Ballon (1) nach einem der Ansprüche 1 bis 5, wobei die Vorrichtung (7) zur Lenkung der Position des Schwerpunkts des lenkbaren Ballons eine aktive Vorrichtung ist.

7. Stratosphärischer lenkbarer Ballon (1) nach Anspruch 6, umfassend Massen (7a), und wobei die aktive Vorrichtung (7) zur Lenkung der Position des Schwerpunkts des lenkbaren Ballons gesteuerte Elemente umfasst, die zum Bewegen der Massen (7a) konfiguriert sind.

8. Stratosphärischer lenkbarer Ballon (1) nach Anspruch 7, wobei die gesteuerten Elemente Aktuatoren (7b) und Rückstellvorrichtungen (7c) umfassen.

9. Stratosphärischer lenkbarer Ballon (1) nach Anspruch 7 oder 8, wobei die Massen (7a) Elemente umfassen, die an Bord des lenkbaren Ballons mitgeführt werden.

10. Stratosphärischer lenkbarer Ballon (1) nach einem der Ansprüche 6 bis 9, wobei die aktive Vorrichtung (7) zur Lenkung der Position des Schwerpunkts des lenkbaren Ballons mindestens ein Element umfasst, das um die Hülle herum beweglich ist.

11. Stratosphärischer lenkbarer Ballon (1) nach einem der Ansprüche 1 bis 5, wobei die Vorrichtung (7) zur Lenkung der Position des Schwerpunkts des lenkbaren Ballons eine passive Vorrichtung ist.

12. Lenkbarer Ballon nach Anspruch 11, wobei die passive Vorrichtung (7) zur Lenkung der Position des Schwerpunkts des lenkbaren Ballons eine vorbestimmte Positionierung von an Bord des lenkbaren Ballons mitgeführten Elementen umfasst, so dass der Schwerpunkt des lenkbaren Ballons zwischen seiner Längsachse (AL) und dem Solargenerator (6) liegt.

13. Stratosphärischer lenkbarer Ballon (1) nach Anspruch 12, wobei die an Bord mitgeführten Elemente mindestens eine elektrische Batterie und/oder mindestens eine Brennstoffzelle und/oder mindestens einen Treibstofftank umfassen.

14. Stratosphärischer lenkbarer Ballon (1) nach einem der Ansprüche 1 bis 13, wobei die Vorrichtung (5) zur Lagestabilisierung des lenkbaren Ballons eine aktive Vorrichtung ist.

15. Stratosphärischer lenkbarer Ballon (1) nach Anspruch 14, wobei die aktive Vorrichtung (5) zur Lagestabilisierung des lenkbaren Ballons aerodynamische Steuerflächen und/oder kardanisch aufgehängte Triebwerke und/oder Seitentriebwerke und/oder Schwungräder umfasst.

16. Stratosphärischer lenkbarer Ballon (1) nach einem der Ansprüche 1 bis 13, wobei die Vorrichtung (5) zur Lagestabilisierung des lenkbaren Ballons eine passive Vorrichtung ist.

17. Stratosphärischer lenkbarer Ballon (1) nach Anspruch 16, wobei die passive Vorrichtung (5) zur Lagestabilisierung des lenkbaren Ballons eine Pendelrückstellung ist, die durch eine vorbestimmte Platzierung des Schwerpunkts des lenkbaren Ballons außerhalb der Längsachse (AL) induziert wird.

18. Verfahren zur Steuerung eines stratosphärischen lenkbaren Ballons (1), umfassend eine flexible Hülle (2), die mit einem Solargenerator (6) versehen ist, der auf dem oberen Teil der flexiblen Hülle angeordnet ist, der dazu bestimmt ist, während des Fluges von der Sonne beleuchtet zu werden, **dadurch gekennzeichnet, dass** man die Position des Schwerpunkts des lenkbaren Ballons und die Lagestabilisierung des lenkbaren Ballons in gekoppelter Weise steuert (8), so dass, wenn die Geschwindigkeit der Bewegung des lenkbaren Ballons in Bezug auf die umgebende Luft unter einem ersten Schwellenwert (S1) liegt und/oder die Temperatur des Solargenerators über einem zweiten Schwellenwert (S2) liegt, der lenkbare Ballon eine Drehung im Wesentlichen um eine halbe Umdrehung um seine Längsachse (AL) ausführt, die es ermöglicht, den Solargenerator (6) vor der Sonneneinstrahlung zu schützen.

## Claims

1. A stratospheric airship (1) comprising a flexible envelope (2) equipped with a solar generator (6) arranged on the upper part of the flexible envelope (2) intended to be illuminated in flight by the sun, the airship (1) comprising:
- at least one device (7) for managing the position of the centre of gravity of the airship;
- at least one device (5) for stabilising the attitude of the airship; and
- a module (8) for the coupled control of said devices (7, 5), **characterised in that** the module is configured to control the airship (1), when the speed of travel of the airship (1) with respect to the surrounding air is below a first threshold (S1) and/or the temperature of the solar generator is above a second threshold (S2), in such a way that it rotates by substantially half a turn about its longitudinal axis (AL), allowing the solar generator (6) to be protected from illumination by the sun.

2. The stratospheric airship (1) according to claim 1, wherein the first threshold (S1) is below 10 ms⁻¹.

3. The stratospheric airship (1) according to claim 2, wherein the first threshold (S1) is equal to 5 ms⁻¹.

4. The stratospheric airship (1) according to one of claims 1 to 3, wherein the second threshold (S2) is below 120 °C.

5. The stratospheric airship (1) according to claim 4, wherein the second threshold (S2) is equal to 100 °C.

6. The stratospheric airship (1) according to one of claims 1 to 5, wherein the device (7) for managing the position of the centre of gravity of the airship is an active device.

7. The stratospheric airship (1) according to claim 6, comprising weights (7a), and wherein the active device (7) for managing the position of the centre of gravity of the airship comprises controlled elements configured to shift the weights (7a).

8. The stratospheric airship (1) according to claim 7, wherein the controlled elements comprise actuators (7b) and return devices (7c).

9. The stratospheric airship (1) according to claim 7 or 8, wherein the weights (7a) comprise elements carried on board the airship.

10. The stratospheric airship (1) according to one of claims 6 to 9, wherein the active device (7) for managing the position of the centre of gravity of the airship comprises at least one element able to move around the envelope.

11. The stratospheric airship (1) according to one of claims 1 to 5, wherein the device (7) for managing the position of the centre of gravity of the airship is a passive device.

12. The airship according to claim 11, wherein the passive device (7) for managing the position of the centre of gravity of the airship comprises a predetermined positioning of elements carried on board the airship, so that the centre of gravity of the airship is located between its longitudinal axis (AL) and the solar generator (6).

13. The stratospheric airship (1) according to claim 12, wherein the on-board elements comprise at least one electric battery, and/or at least one fuel cell and/or at least one fuel tank.

14. The stratospheric airship (1) according to one of claims 1 to 13, wherein the device (5) for stabilising the attitude of the airship is an active device.

15. The stratospheric airship (1) according to claim 14, wherein the active device (5) for stabilising the attitude of the airship comprises aerodynamic control surfaces and/or gimbal-mounted thrusters and/or side thrusters and/or flywheels.

16. The stratospheric airship (1) according to one of claims 1 to 13, wherein the device (5) for stabilising the attitude of the airship is a passive device.

17. The stratospheric airship (1) according to claim 16, wherein the passive device (5) for stabilising the attitude of the airship is a pendulum return induced by a predetermined placing of the centre of gravity of the airship, outside the longitudinal axis (AL).

18. A method for controlling a stratospheric airship (1) comprising a flexible envelope (2) equipped with a solar generator (6) arranged on the upper part of the flexible envelope intended to be illuminated in flight by the sun, **characterised in that** the position of the centre of gravity of the airship and the stabilisation of the attitude of the airship are controlled (8) in a coupled manner so that, when the speed of travel of the airship with respect to the surrounding air is below a first threshold (S1) and/or the temperature of the solar generator is above a second threshold (S2), the airship rotates by substantially half a turn about its longitudinal axis (AL), allowing the solar generator (6) to be protected from illumination by the sun.
